Europäisches Patentamt

European Patent Office

Office européen des brevets

(11) Veröffentlichungsnummer: **0 370 136 B1**

## EUROPÄISCHE PATENTSCHRIFT

(45) Veröffentlichungstag der Patentschrift: **06.05.92**

(21) Anmeldenummer: **88121065.2**

(22) Anmeldetag: **16.12.88**

(51) Int. Cl.⁵: **F16N 7/38**, F16N 39/06

(54) **Schmiermittelfördereinrichtung.**

(30) Priorität: **25.11.88 DE 3839768**

(43) Veröffentlichungstag der Anmeldung:
**30.05.90 Patentblatt 90/22**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
**EP-A- 0 110 410**
**DE-A- 3 430 040**
**GB-A- 513 707**
**US-A- 2 609 891**

**VDI NACHRICHTEN. vol. 30, no. 37, September 76, DUSSELDORF DE Seiten 17 - 18;
"Zuverlässig mit Tribotechnik"**

(73) Patentinhaber: **HYDAC TECHNOLOGY GMBH
Industriestrasse
W-6603 Sulzbach/Saar(DE)**

(72) Erfinder: **Kenter, Peter, Dipl.-Ing.
Saarbrückerstrasse 216
W-6602 Saarbrücken-Dudweiler(DE)**
Erfinder: **Dyroff, Walter, Ing. (grad.)
Schieferweg 15
W-4837 Verl 1(DE)**
Erfinder: **Scheuber, Harald R., Dipl.-Ing.
Birkenallee 5a
W-6823 Neulussheim(DE)**

(74) Vertreter: **Held, Martin, Dr.-Ing. et al
Patentanwälte Bartels, Fink, Held Lange
Strasse 51
W-7000 Stuttgart 1(DE)**

**Beschreibung**

Die Erfindung betrifft eine Schmiermittelfördereinrichtung, welche die Merkmale des Oberbegriffs des Anspruches 1 aufweist, für die Schmiermittelversorgung wenigstens eines Dosierventils in einer statischen oder dynamischen Einleitungsanlage.

Anlagen dieser Art sind bekannt, vergl. VDI-Nachrichten, Vol. 30, Nr. 37, Seite 18, Bild 7.

Die bekannten Schmiermittelfördereinrichtungen dieser Art erlauben es, auf ein Filter in der Hauptleitung zu verzichten, weil das gesamte von der Pumpe geförderte Öl mittels des in der Förderleitung zwischen der Pumpe und dem Druck- und Entlastungsventil liegenden Filters filtriert wird. Da dieses Filter vor dem Druck- und Entlastungsventil angeordnet ist, hat der Zustand des Filters, also der Grad, in dem es durch Schmutzpartikel zugesetzt ist, keinerlei Einfluß auf den am Ausgang des Druck und Entlastungsventils herrschenden Druck. Das Filter erhöht mit zunehmender Verschmutzung nur den Strömungswiderstand in der Förderleitung zwischen der Pumpe und dem Druck- und Entlastungsventil, was bis zu einem gewissen Ausmaße die ordnungsgemäße Funktion der Schmiermittelfördereinrichtung nicht beeinträchtigt.

Der Erfindung liegt die Aufgabe zugrunde, die bekannten statitischen und dynamischen Einleitungsanlagen dahingehend zu verbessern, daß eine einwandfreie Arbeitsweise auch bei solchen Anwendungsfällen sichergestellt ist, bei denen bedarfsweise eine Druck- Schnellentlastung jedes vorhandenen Dosierventils erforderlich ist. Diese Aufgabe wird erfindungsgemäß mit einer Schmier-mittelfördereinrichtung gelöst, welche die Merkma-le des Anspruches 1 aufweist.

Für eine selbsttätige Schnellentlastung des Dosierventils oder der Dosierventile, wie sie vor allem bei zähflüssigem Öl oder Fließfett erwünscht sein kann, braucht nur kurzzeitig die Pumpe auf Saugbetrieb umgeschaltet zu werden, wodurch nur die Drehrichtung des Antriebsmotors geändert zu werden braucht, was automatisch von einer Steuereinrichtung aus erfolgen kann. Während des Saugbetriebs der Pumpe verhindert, das das Filter überbrückende und in Richtung von der Pumpe zum Dosierventilanschluß sperrende Rückschlagventil daß das Schmiermittel in Richtung gegen die Pumpe hin das Filter durchströmt. Der Anschluß dieses Rückschlagventils an die Förderleitung ist vorzugsweise gemäß Anspruch 6 oder Anspruch 7 ausgeführt.

Im folgenden ist die Erfindung anhand von in der Zeichnung dargestellten Ausführungsbeispielen im einzelnen erläutert.

Es zeigen

Fig. 1     einen unvollständig dargestellten Schnitt eines ersten Ausführungsbeispiels,

Fig. 2     ein Schaltbild dieses Ausführungsbeispiels,

Fig. 3     ein Schaltbild eines zweiten Ausführungsbeispiels.

Eine Schmiermittelfördereinrichtung für die Schmiermittelversorgung wenigstens eines Dosierventils in einer statischen oder dynamischen Einleitungsanlage weist ein Gehäuse 1 auf, in dem sämtliche nachfolgend erwähnten Bauteile enthalten sind. Zu einem Schmiermittel-Vorratsbehälter 2 führt eine Einfüllleitung 3, deren dem Vorratsbehälter 2 abgekehrtes Ende an einen in der Gehäusewand angeordneten Einfüllstutzen 4 angeschlossen ist, der von außen her mittels eines manuell betätigbaren Verschlußdeckels verschließbar ist und geöffnet werden kann. Eine Pumpe 5, die von einem Elektromotor 6 antreibbar ist, fördert Schmiermittel aus dem Vorratsbehälter 2 heraus in eine Förderleitung 7, die zu einer Anschlußvorrichtung 8 für die Hauptleitung der Anlage führt.

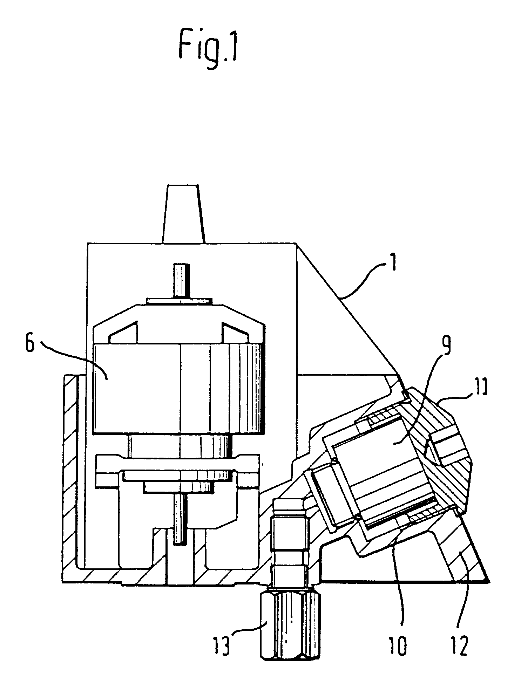

In der Förderleitung 7 ist auswechselbar ein Schmiermittelfilter 9 angeordnet. Wie Fig.1 zeigt, weist das Gehäuse 1 für die Aufnahme des Filters 9 eine von außen her zugängliche, zylindrische Aufnahme 10 auf, die mittels eines Schraubdeckels 11 dicht verschließbar ist. Die Längsachse der Aufnahme 10 ist in das Gehäuse 1 hinein nach unten geneigt, wodurch ein Austritt von Schmiermittel beim Wechseln des Filters 9 vermieden wird. Für einen Filterwechsel oder eine Filterreinigung brauchen nur der Schraubdeckel 11 abgenommen und das Filter 9 aus dem am Grund der Aufnahme 10 vorgesehenen Innengewinde herausgedreht zu werden. Ein Filterwechsel nimmt deshalb nur wenig Zeit in Anspruch, so daß er während einer Pausenzeit ohne eine Abschaltung der Schmieranlage problemlos möglich ist.

Der geneigt verlaufende Bereich 12 der Wand des Gehäuses 1, an den sich die Aufnahme 10 anschließt, weist im Abstand neben der Aufnahme 10 den Einfüllstutzen 4 auf, der eine Form wie die Aufnahme 10 hat. Das Einfüllen des Schmiermittels ist deshalb problemlos möglich.

Wie die Fig. zeigen, führt die Förderleitung 7 von der Austrittseite des Filters 9 zu einem Druck- und Entlastungsventil 13, mittels dessen in der nicht dargestellten Anlage in bekannter Weise für die ordnungsgemäße Arbeitsweise der Dosierventile der Wechsel zwischen Intervallen, in denen der Schmiermitteldruck an den Dosierventilen anliegt, und Intervallen bewirkt wird, in denen die zu den Dosierventilen führende Hauptleitung druckentlastet ist. Für diese Druckentlastung führt vom Druck- und Entlastungsventil 13 eine Entlastungsleitung 14 zum Vorratsbehälter 2, in der ein Überdruckventil 15 liegt, das ab einem Mindestwert des Druckes den Durchfluß durch die Entlastungsleitung 14 zum Vorratsbehälter 2 freigibt.

Vom Druck- und Entlastungsventil 13 führt die Förderleitung 7 zu der Anschlußvorrichtung 8 für die Hauptleitung. In dem letztgenannten Abschnitt sind an die Förderleitung 7 ein Manometer 17 sowie ein erster Drucksensor 18 angeschlossen. Das Manometer 17 ist neben dem Schraubdeckel im Bereich 12 des Gehäuses 1 angeordnet. Der erste Drucksensor 18, der ein dem Druck in der Förderleitung 7 entsprechendes elektrisches Signal erzeugt, ist an eine nicht dargestellte Differenzdruck-Überwachungseinrichtung angeschlossen. Mit dieser Einrichtung ist auch der Signalausgang eines zweiten Drucksensors 19 verbunden, der wie der erste Drucksensor 18 ausgebildet ist, aber an die Förderleitung 7 zwischen der Pumpe 5 und dem Filter 9 angeschlossen ist. Mittels der beiden Drucksensoren 18 und 19 sowie der Differenzdruck-Übarwachungseinrichtung wird der Druckabfall am Filter 9 ermittelt. Hat dieser Druckabfall einen Wert erreicht, der einen Filteraustausch oder ein Reinigen des Filters 9 erforderlich macht, dann wird dies durch ein entsprechendes Signal der Differenzdruck-Überwachungseinrichtung angezeigt. Bei einer der nächsten Pausenzeiten kann dann dar Filteraustausch oder die Filterreinigung vorgenommen werden, ohne daß die Schmieranlage abgeschaltet werden müßte.

Ein Niveausensor 20 kontrolliert das Schmiermittelniveau im Vorratsbehälter 2 und löst ein Signal aus, sobald das Niveau einen unteren Grenzwert unterschreitet, damit rechtzeitig Schmiermittel in den Einfüllstutzen 4 eingeleitet werden kann. Ferner ist aus Sicherheitsgründen ein Überdruckventil 21 vorgesehen, das in einer Rücklaufleitung 22 liegt, die an die Förderleitung 7 zwischen dem Filter 9 und dem Druck- und Entlastungsventil 13 angeschlossen ist und zum Vorratsbehälter 2 führt.

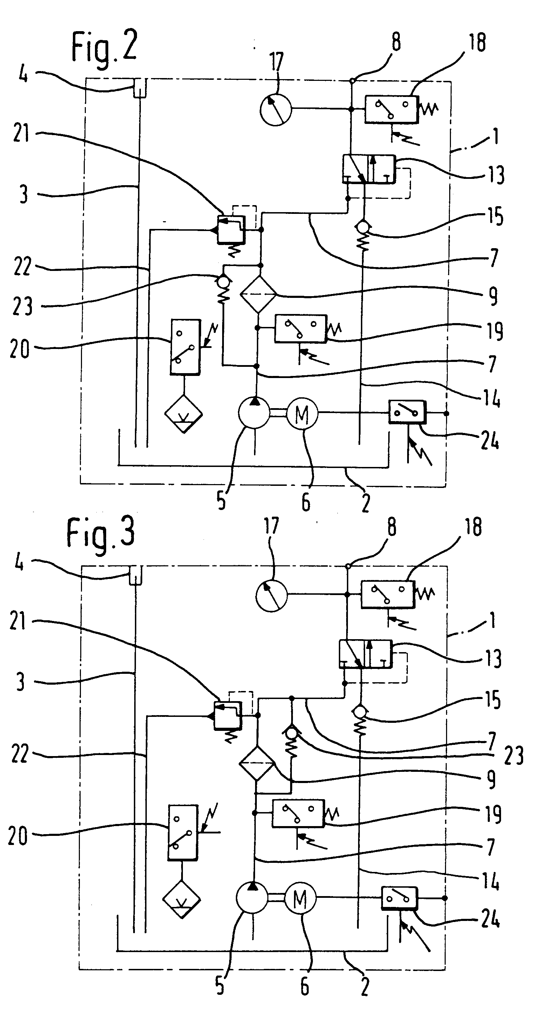

Das Ausführungsbeispiel der erfindungsgemäßen Schmiermittelfördereinrichtung, dessen Schaltbild in Fig.2 dargestellt ist, bietet die Möglichkeit der Schnellentlastung der angeschlossenen Einleitungsanlage, was insbesondere dann vorteilhaft ist, wenn es sich bei dem Schmiermittel um ein zähflüssiges Öl oder ein Fließfett handelt.

Um die Drehrichtung des Motors 6 umkehren und damit die Pumpe 5 von Pumpbetrieb auf Saugbetrieb und umgekehrt umschalten zu können, ist dem Motor 6 ein Drehrichtungsumkehrungs-Schalter 24 zugeordnet, der von der nicht dargestellten Steuereinrichtung aus ansteuerbar ist. Sobald eine Schnellentlastung erforderlich ist, wird der Drehrichtungsumkehrungsschalter 24 kurzzeitig betätigt, wodurch für diese Zeitspanne die Pumpe 5 in den Saugbetrieb übergeht. Damit während des Saugbetriebs der Pumpe 5 das Schmiermittel nicht durch das Schmiermittelfilter 9 hindurch zur Pumpe hin gesaugt werden kann, ist das Schmiermittelfilter 9 von einem Rückschlagventil 23 überbrückt. Wie Fig.2 zeigt, ist das Rückschlagventil 23 einerseits zwischen der Pumpe 5 und dem zweiten Drucksensor 19 sowie andererseits zwischen dem Schmiermittelfilter 9 und dem Überdruckventil 21 an die Förderleitung 7 angeschlossen, und zwar derart, daß es in Richtung von der Pumpe 5 zur Anschlußvorrichtung 8 hin sperrt. Während des Pumpbetriebes kann deshalb das Schmiermittel nicht durch das Rückschlagventil 23 fließen. Wird jedoch für eine Schnellentlastung der Dosierventile der Pumpe 5 in den Saugbetrieb umgeschaltet, öffnet das Rückschlagventil 23, wodurch der von der Pumpe 5 erzeugte Druck über die Förderleitung 7 zur angeschlossenen Anlage übertragen werden kann, ohne daß am Schmiermittelfilter 9 ein Druckabfall zur Pumpe 5 hin entsteht.

Das in Fig.3 dargestellte zweite Ausführungsbeispiel unterscheidet sich von dem Ausführungsbeispiel gemäß Fig.2 nur dadurch, daß das Rückschlagventil 23 einerseits zwischen dem Schmiermittelfilter 9 und dem zweiten Drucksensor 19 sowie andererseits zwischen dem Überdruckventil 21 und dem Druck-und Entlastungsventil 13 an die Förderleitung 7 angeschlossen ist. Auch hier sperrt das Überdruckventil 23 in Richtung von der Pumpe 5 zur Anschlußvorrichtung 8 hin, damit während des Pumpbetriebes das geförderte Schmiermittel ausnahmslos durch das Schmiermittelfilter 9 hindurchtreten muß. Nur während des kurzzeitigen, zum Zwecke einer Schnellentlastung erfolgenden Saugbetriebes dar Pumpe 5 ist das Rückschlagventil 23 geöffnet und vermeidet dadurch einen Druckabfall am Schmiermittelventil 9 zur Pumpe 5 hin. Daher fließt auch bei diesem Ausführungsbeispiel während des Saugbetriebes der Pumpe 5 das Schmiermittel nicht durch das Schmiermittelfilter 9 hindurch gegen die Pumpe 5 hin, was, wie bei dem Ausführungsbeispiel gemäß Fig.2, die Zeit verkürzt, die notwendig ist, um den Druck an der Anschlußvorrichtung 8 und damit in der angeschlossenen Anlage abzusenken.

**Patentansprüche**

1. Schmiermittelfördereinrichtung für die Schmiermittelversorgung wenigstens eines Dosierventils in einer statischen oder dynamischen Einleitungsanlage, mit einem Schmiermittel-Vorratsbehälter (2), einer von einem Motor (6) angetriebenen, aus dem Vorratsbehälter (2) Schmiermittel in eine Förderleitung (7) überführenden Pumpe (5), einem Druck- und Entlastungsventil (13), das in der von der Pumpe (5) zu einem Anschluß (8) für wenigstens ein Dosierventil führenden Förderleitung (7) liegt und während der Entlastungsintervalle diese Leitung (7) mit einer zum Schmiermittel-Vorratsbehälter (2) führenden Entlastungsleitung (14) verbindet, und einem in der Förderleitung (7) zwischen der Pumpe (5) und dem Druck- und Entlastungsventil (13) liegenden auswechselbaren Filter (9), dadurch gekennzeichnet, daß

a) ein das Filter (9) überbrückendes Rückschlagventil (23) vorgesehen ist, das gegen den von der Pumpe (5) in Richtung zum Anschluß (8) fließenden Schmiermittelstrom sperrend ist, und daß

b) die Pumpe (5) von Pumpbetrieb auf Saugbetrieb und umgekehrt umschaltbar ist.

2. Einrichtung nach Anspruch 1, dadurch gekennzeichnet, daß in der Entlastungsleitung (14) ein Überdruckventil (15) angeordnet ist.

3. Einrichtung nach Anspruch 1 oder 2, dadurch gekennzeichnet, daß zwischen dem Filter (9) und dem Dosierventil-Anschluß (8), vorzugsweise zwischen letzterem und dem Druck-und Entlastungsventil (13), ein erster Drucksensor (18) und zwischen der Pumpe (5) und dem Filter (9) ein zweiter Drucksensor (19) an die Förderleitung (7) angeschlossen sind und daß der Signalausgang der beiden Drucksensoren (18, 19) mit einer Differenz-Überwachungseinrichtung verbunden ist.

4. Einrichtung nach Anspruch 3, dadurch gekennzeichnet, daß an denjenigen Abschnitt der Förderleitung (7), an den der erste Drucksensor (18) angeschlossen ist, auch ein Manometer (17) mit ablesbarer Anzeige angeschlossen ist.

5. Einrichtung nach einem der Ansprüche 1 bis 4, gekennzeichnet durch ein Überdruckventil (21), das in geöffnetem Zustand den zwischen dem Filter (9) und dem Druck- und Entlastungsventil (13) liegenden Abschnitt der Förderleitung (7) mit der zum Schmiermittel-Vorratsbehälter (2) führenden Entlastungsleitung (14) verbindet.

6. Einrichtung nach Anspruch 5, dadurch gekennzeichnet, daß das Rückschlagventil (23) einerseits zwischen dar Pumpe (5) und dem zweiten Drucksensor (19) und andererseits zwischen dem Filter (9) und dem Überdruckventil (21) an die Förderleitung (7) angeschlossen ist.

7. Einrichtung nach Anspruch 5, dadurch gekennzeichnet, daß das Rückschlagventil (23) einerseits zwischen dem Filter (9) und dem zweiten Drucksensor (19) und andererseits zwischen dem Überdruckventil (21) und dem Druck- und Entlastungsventil (13) an die Förderleitung (7) angeschlossen ist.

## Claims

1. Lubricant supply device for the supply of lubricant to at least one dosing valve in a static or dynamic single pipe installation, with a lubricant storage container (2), a pump (5) driven by a motor (6) and transferring lubricant from the storage container (2) into a supply line (7), a pressure and relief valve (13), which is located in the supply line (7) loading from the pump (5) to a connection (8) for at least one dosing valve and during the relief interval connects this line (7) to a discharge line (14) leading to the lubricant storage container (2) and an exchangeable filter (9) located in the supply line (7) between the pump (5) and the pressure and relief valve (13), characterised in that

a) a non-return valve (23) bypassing the filter (9) is provided, which has a blocking action with respect to the flow of lubricant flowing from the pump (5) in the direction of the connection (8), and that

b) the pump (5) may be switched from pumping operation to suction operation and vice versa.

2. Device according to Claim 1, characterised in that a pressure-relief valve (15) is located in the discharge line (14).

3. Device according to Claim 1 or 2, characterised in that between the filter (9) and the dosing valve connection (8), preferably between the latter and the pressure and relief valve (13), a first pressure sensor (18) and between the pump (5) and the filter (9) a second pressure sensor (19) are connected to the supply line (7) and that the signal output from the two pressure sensors (18, 19) is connected to a difference-monitoring device.

4. Device according to Claim 3, characterised in that a pressure-gauge (17) with a readable display is also connected to that section of the supply line (7), to which the first pressure sensor (18) is connected.

5. Device according to one of Claims 1 to 4, characterised by a pressure-relief valve (21), which in the open condition connects, the section of the supply line (7) located between the filter (9) and the pressure and relief valve (13) to the discharge line (14) leading to the lubricant storage container (2).

6. Device according to Claim 5, characterised in that the non-return valve (23) is connected to the supply line (7) at one side between the pump (5) and the second pressure sensor (19) and at the other side between the filter (9) and the pressure-relief valve (21).

7. Device according to Claim 5, characterised in that the non-return valve (23) is connected to the supply line (7) at one side between the filter (9) and the second pressure sensor (19) and on the other side between the pressure-relief valve (21) and the pressure and relief valve (13).

**Revendications**

1. Dispositif d'alimentation de carburant pour alimenter, au moins, une soupape de dosage dans une installation statique ou dynamique qui comprend un réservoir de lubrifiant (2), une pompe (5), mue par un moteur (6) pour transférer le lubrifiant du réservoir (2) dans une ligne d'alimentation ou de transport (7), une valve de pression et de décharge (13) intercalée dans le conduit d'alimentation (7) reliant, au moins, une valve de dosage de la pompe (5) à un raccord (8) d'une ligne d'alimentation aboutissant à, au moins, une ligne ou à un conduit d'alimentation (7) et qui, pendant les intervalles de décharge ou de décompression, relie ladite ligne ou ledit conduit (7) avec une ligne de décharge (14) aboutissant au réservoir de lubrifiant (2), caractérisé en ce qu'il est prévu :

   a) un clapet de non-retour (23) pontant le filtre (9), qui bloque la circulation du courant de lubrifiant circulant de la pompe (5) en direction du raccord (8), et,
   b) la pompe (5) peut être commutée pour opérer soit en aspiration, soit en compression ou refoulement.

2. Dispositif selon la revendication 1, caractérisé en ce que dans la ligne de décharge (14) est montée une valve de surpression (15).

3. Dispositif selon la revendication 1 ou 2, caractérisé en ce que, entre le filtre (9) et le raccord de valve de dosage (8), de préférence, entre ce dernier et la valve de pression et de décharge (13), est connecté un premier capteur de pression (18), tandis qu'un second capteur de pression (19) est relié à la ligne d'alimentation (7), la sortie de ces deux capteurs (18, 19) étant reliée à un dispositif de surveillance de différence.

4. Dispositif selon la revendication 3, caractérisé en ce que le tronçon de la ligne d'alimentation (7) auquel est relié le premier capteur de pression (16) comporte aussi un manomètre (17) à lecture immédiate.

5. Dispositif selon l'une quelconque des revendications 1 à 4, caractérisé en ce qu'il comporte une valve de surpression (21), qui, en position ouverte, relie la section de la ligne d'alimentation (7) comprise entre le filtre (9) et la valve de pression et de décharge (13) avec la ligne de décharge (14) aboutissant au réservoir de lubrifiant (2).

6. Dispositif selon la revendication 5, caractérisé en ce que le clapet de non-retour (23) est branché, d'une part, entre la pompe (5) et le second capteur de pression (19) et, d'autre part, entre la valve de surpression (21) et la ligne d'alimentation (7).

7. Dispositif selon la revendication 5, caractérisé en ce que le clapet de non-retour (23) est monté dans le conduit d'alimentation (7) entre, d'une part, le filtre (9) et le second capteur de pression (19) et, d'autre part, la soupape de sûreté (21) et la soupape de décompression (13).

# Fig.1

Fig.2

Fig.3